# EUROPEAN PATENT APPLICATION

(11) **EP 1 860 407 A2**
(43) Date of publication of application: **28.11.2007**
(21) Application number: 06380142.7
(22) Date of filing: 30.05.2006
(51) Int. Cl.: G01D 5/245

(54) **Optoelectronic measuring device**

(30) Priority: 26.05.2006 ES 200601400
(71) Applicant: FAGOR, S.COOP., 20500 Mondragon (Gipuzkoa) (ES)
(72) Inventor: Urra Chandia, Juan Carlos, 20500 Mondragon (Gipuzkoa) (ES); Martinez-Toledano Egurrola, Oscar, 20600 Eibar (Gipuzkoa) (ES); Arana Lizundia, Xabier, 20500 Mondragon (Gipuzkoa) (ES)
(74) Representative: Igartua, Ismael

(57) **Abstract**

"Optoelectronic measuring device that comprises detection means (3) and a graduated element (2) that are able to move between each other, incremental signals (A, B) that are used in order to determine the relative position between said graduated element (2) and said detection means (3) being generated. During said movement at least one reference signal is able to be generated at least on the basis of an information stored in said device (1), comprising said information comprises at least one reference position. Said detection means (3) comprise control means (14) that compare said relative position with the stored reference position, the reference signal being generated when it is determined that said specific relative position is equal to said stored reference position".

## Description

### TECHNICAL FIELD

The present invention relates to optoelectronic measuring devices that are able to determine the relative position between a graduated element and detection means.

### PRIOR ART

Known optoelectronic measuring devices comprise detection means and a graduated element that are movable between each other, said device being able to determine the relative position between said graduated element and said detection means. When said detection means and said graduated element move between each other incremental signals are generated, and said detection means comprise control means which, in accordance with said incremental signals, determine said relative position.

Normally, the user of the device needs at least one reference in order to control the movement between the detection means and the graduated element, a reference that can be for example an end stop or the machine zero (zero or index reference signal), said reference corresponding to a specific reference position between said graduated element and said detection means. Known devices of the type mentioned above comprise physical reference marks in order to identify said references, which may be, for example, optical or magnetic, and which are disposed in specific reference positions, said detection means being able to detect said reference marks. On detecting said reference marks, the device generates a reference signal.

US Patent 5115573 A, for example, discloses a device of this type wherein the graduated element comprises a graduated scale with a plurality of incremental marks, the incremental signals being generated as said incremental marks are detected during the relative movement between said graduated scale and the detection means. Said graduated element also comprises a reference scale with a plurality of reference marks disposed parallel to said graduated scale. Said reference marks are magnetic and are disposed in fixed positions, thereby enabling the selection of only the reference marks of interest, each of the reference marks selected being linked to a specific reference position.

The drawback with this type of device is that reference positions can only be defined in the positions in which the reference marks are disposed, it not being possible to define a reference position, for example, in a specific position between two adjacent reference marks.

European Patent EP 0545701 A1 discloses a device whose graduated element also comprises reference marks in addition to incremental marks. Said reference marks comprise a code sequence that can be detected by the detection means, and said device also comprises a stored reference code that is compared with the code of the detected reference marks, thereby generating the reference signal in the event that said detected code coincides with said stored reference code. European Patent EP 1466142 A2 also discloses a device whose graduated element comprises reference marks that comprise a code sequence, said code sequence being a pseudo-random code. The detection means are capable of detecting sequences of said pseudo-random code, the detected sequence being compared with a reference code stored in said device. If the detected sequence and said reference code coincide, a reference signal is generated. Said graduated element comprises incremental marks that are also detected by the detection means, thereby generating incremental signals, as said incremental marks are detected during the movement between said graduated element and said detection means. Based on said incremental signals a clock signal is generated that is used to capture the code sequence, which is compared with said stored reference code.

### DISCLOSURE OF THE INVENTION

It is an object of this invention to provide an optoelectronic measuring device that is able to determine the relative position between detection means and a graduated element, and which can also detect at least one specific reference position between said detection means and said graduated element, without using specific physical reference marks and in a simple manner.

The optoelectronic measuring device of the invention comprises detection means and a graduated element that are movable between each other, thereby generating during said movement incremental signals that are used to determine the relative position between said graduated element and said detection means.

In the device is stored an information on the basis of which can be generated at least one reference signal. Said information comprises at least one reference position and the detection means comprise control means that determine the relative position between said detection means and the graduated element. Said control means compare said specific relative position with said stored reference position, and in the event that they coincide, said control means generate a reference signal.

As a consequence, physical references (marks or codes, for example) are not necessary in order to detect a reference position, which also simplifies the mode of detecting said reference position, as captures or detections additional to those needed to determine the relative position between the graduated element and the detection means, or the generation of additional signals in order to conduct said detection, are not necessary.

Furthermore, by comparing the reference positions to the specific relative positions, in said device can be stored any relative position between said graduated element and said detection means as a reference position.

These and other advantages and characteristics of the invention will be made evident in the light of the drawings and the detailed description thereof.

### DESCRIPTION OF THE DRAWINGS

FIG. 1 shows an embodiment of the optoelectronic measuring device of the invention.
FIG. 2 shows an embodiment of the graduated element of the device of FIG. 1.
FIG. 3 is a schematic view of the detection means of the device of FIG. 1, connected to the operating means.

### DETAILED DISCLOSURE OF THE INVENTION

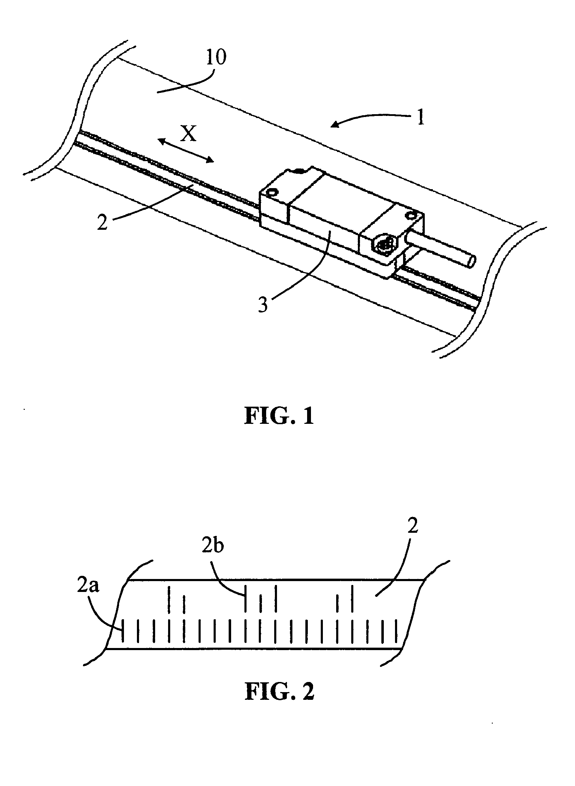

Figure 1 shows an embodiment of the optoelectronic measuring device 1 of the invention, which comprises detection means 3 and a graduated element 2 that are movable between each other. In the graduated element 2 are disposed at the same distance between each other a plurality of incremental marks 2a shown in Figure 2 and which are preferably opaque. When said detection means 3 and said graduated element 2 move between each other, said detection means 3 detect said incremental marks 2a, so that incremental signals A and B dephased by 90° between each other are generated, said incremental signals A and B being used to determine the relative position between said graduated element 2 and said detection means 3.

In a preferred embodiment, the device 1 relates to a device of linear displacement, although said device 1 can also relate to a rotary device. In said preferred embodiment, the graduated element 2 corresponds with a graduated scale 2 fixed to a static support 10, and the detection means 3 correspond with a readhead 3, generating the incremental signals A and B during the displacement of said readhead 3 in relation to said graduated scale 2 in a direction of displacement X parallel to said graduated scale 2, thereby enabling the relative position of said readhead 3 in relation to said graduated scale 2 to be determined.

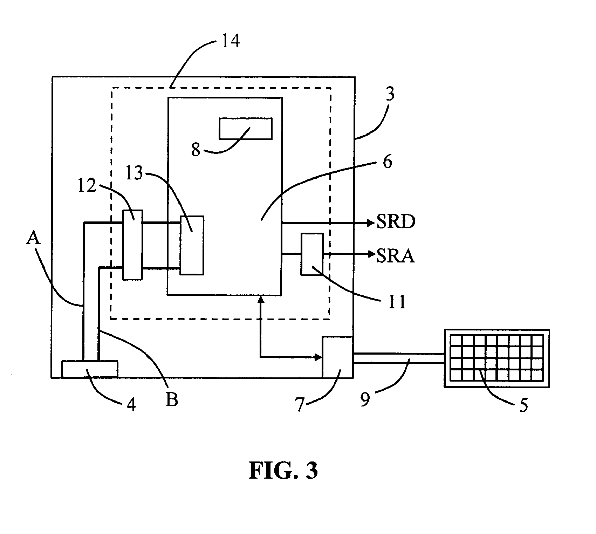

In the preferred embodiment, the readhead 3 comprises at least one light emitter (not shown in the figures) that emits a beam of light towards the graduated scale 2, and photodetector means 4 shown in figure 3, and which preferably receive the light that is reflected on the incremental marks 2a of said graduated scale 2 (although they can also receive the light that crosses said graduated scale 2), said photodetector means 4 thereby converting said light received in the incremental signals A and B. Said incremental marks 2a can also be magnetic, for example, said readhead 3 then comprising means to detect said magnetic marks, such as Hall effect cells.

In device 1 is stored an information on the basis of which can be generated at least one reference signal, that may correspond with an alarm signal (an end stop, for example) or with a zero reference signal (index or machine zero), for example, or any other type of reference that is required. Said stored information comprises at least one reference position that corresponds with a specific relative position between the graduated scale 2 and the readhead 3. The detection means 3 comprise control means 14 connected to the photodetector means 4, so that said control means 14 receive the incremental signals A and B, said control means 14 being those that determine the relative position between said graduated scale 2 and said readhead 3. Said control means 14 comprise a memory 8 where said information is stored, and, therefore, said reference position, and compare said stored reference position with the relative position that they determine at each moment. Thus, when said control means 14 determine that a relative position is equal to said stored reference position, in said device 1 is generated a reference signal, it being the control means 14 themselves which generate said reference signal. Said control means 14 can comprise, for example, a micro-controller 6, said micro-controller 6 having the function of determining said relative position and of performing said comparison. If said micro-controller 6 determines that said positions are the same, it generates a digital output that is connected to the reference signal. Said digital signal can be connected to said reference signal directly to obtain a digital reference signal SRD, or it can be connected by, for example, a digital/analogical converter 11 comprised in said control means 14, to obtain an analogical reference signal SRA, so that said reference signal can be digital or analogical.

The memory 8 can be integrated in the micro-controller 6 itself, although it can also be external to said micro-controller 6, being connected to said micro-controller 6, so that said micro-controller 6 can read the content of said memory 8, or write in said memory 8. The detection means 3 are adapted to connect to operating means 5, being able to operate on the control means 14 through said operating means 5, thereby being able to store the reference position in said memory 8 through said operating means 5, which can be, for example, a keyboard. Said detection means 3 can comprise, for example, an output port 7 connected to the control means 14 and which can connect to said operating means 5, having the ability to operate through said output port 7 on said control means 14 through said operating means 5. Said operating means 5 can be connected to the output port 7 in a wireless manner or by a communication cable 9, said type of communication being a USB or RS-232 communication, for example, although it can also be another type of communication.

The output port 7 is connected to the micro-controller 6 of the control means 14, so that through said output port 7 and the operating means 5, a user can store the reference position in said memory 8. The user can introduce the reference position data that they need through said operating means 5, and said data is received by said micro-controller 6 through said output port 7. Said micro-controller 6 receives the data introduced by the user and stores it in the memory 8.

The control means 14 enable a plurality of stored reference positions to be made available without having to add any additional element, the only limitation being the capacity of the memory 8. Thus, in said memory 8 can be stored, for example, a reference position corresponding to the machine zero (index or zero reference signal) and another two reference positions corresponding to two end stops, one for each direction of displacement in the direction of displacement X, the micro-controller 6 comparing a specific relative position at each moment with each one of said three reference positions. Said micro-controller 6 can comprise a plurality of digital outputs, so that the reference signal can comprise a plurality of output signals, each one of said output signals being linked to one of said digital outputs and to at least one of said reference positions. Thus, for example, the reference positions corresponding to said end stops can be linked to a single output signal, said output signal being generated when it is determined that the relative position is equal to any of said references, or each one of said reference positions can be linked to a different output signal, thereby generating the output signal corresponding to the reference position that is equal to the specific relative position.

Through said operating means 5 the generation of the reference signal can be configured, said operating means 5 operating on said micro-controller 6 through the output port 7 of the control means 14. Thus, the generation of the digital output of said micro-controller 6 can be configured, thereby configuring said reference signal. The level of said digital output can be configured when a pulse is generated, which can be, for example, a constant level, the duration of which can also be configured, or even a level dependent upon a certain function, which in this case can be proportional to the corresponding reference position, for example.

In order to configure the reference signal, the user operates on the control means 14 through the operating means 5. The device 1 can comprise, for example, an application that enables said user to configure said reference signal, and similarly it can comprise another application (or it can be the same application) so that said user stores the required reference positions.

The relative position between the graduated scale 2 and the readhead 3 is determined by the incremental signals A and B, starting from an initial position. Said incremental signals A and B are senoidal, and are squared by a squaring device 12 disposed on the control means 14, said squared incremental signals A and B reaching the micro-controller 6. Said micro-controller 6 comprises a counter 13 that is reached by said squared incremental signals A and B, the value of said counter 13 being added or subtracted depending on the direction of displacement of said readhead 3, said relative position being determined in accordance with said initial position and said counting. On switching on the device 1, one manner of obtaining said initial position is to displace (manually, for example) said readhead 3 in the direction of displacement X to a specific relative position, and to identify said specific relative position as the initial position. In the preferred embodiment, however, said device 1 comprises additional means for detecting the relative position of said readhead 3 in relation to said graduated scale 2 when said device 1 is switched on, without the need to cause a displacement of said readhead 3, thereby avoiding the need to have to adjust the position of said readhead 3 in each start-up. In said preferred embodiment, said additional means comprise a pseudo-random code 2b disposed on the graduated element 2, and said pseudo-random code 2b can be disposed on said graduated scale 2 in parallel to the incremental marks 2a, as shown in figure 2, or on a reference scale (not shown in the figures) fixed to the static support 10 in parallel to said graduated scale 2. Said readhead 3 can detect said pseudo-random code 2b through, for example, a CCD (not shown in the figures), the control means 14 determining said initial position based on said detection. Said additional means are used only to obtain said initial position, and they are not needed to obtain the relative position during the displacement of said readhead 3 in relation to said graduated scale 2, or to detect the reference positions, it being sufficient to detect said incremental marks 2a in order to determine the relative position and said reference positions. As it is the relative position itself that is compared with the stored reference position, with the device 1 of the invention it is possible to determine any possible relative position as a reference position.

## Claims

1. Optoelectronic measuring device that comprises detection means (3) and a graduated element (2) that are able to move between each other, incremental signals (A, B) that are used in order to determine the relative position between said graduated element (2) and said detection means (3) being generated during said movement, and being able to be generated at least one reference signal during said movement on the basis of an information stored in said device (1), **characterised in that** said information comprises at least one reference position and said detection means (3) comprise control means (14) that determine said relative position and compare it with the stored reference position, said control means (14) generating the reference signal when said control means (14) determine that said specific relative position is equal to said stored reference position.

2. Device according to the preceding claim, wherein the reference signal can be configured, so that said reference signal can be digital or analogical.

3. Device according to any of the preceding claims, wherein the reference signal can be configured, so that the level of said reference signal can be configured.

4. Device according to either claim 2 or 3, wherein the detection means (3) are adapted in order to connect to operating means (5), said reference signal being configured through said operating means (5).

5. Device according to any of claims 1 to 3 wherein a plurality of reference positions are stored and wherein the reference signal comprises a plurality of output signals, each one of said output signals being linked to at least one of said reference positions, so that when a relative position equal to said reference positions is determined, the output signals linked to said reference position are generated.

6. Device according to the preceding claim, wherein the detection means (3) are adapted in order to connect to operating means (5), the reference position being able to be stored through said operating means (5).

7. Device according to any of the preceding claims, wherein it comprises a memory (8) where the reference positions are stored.

8. Device according to any of the preceding claims, wherein it comprises additional means in order to detect an initial position between the graduated element (2) and the detection means (3) when said device (1) is switched on.

9. Device according to the preceding claim, wherein the additional means comprise a pseudo-random code (2b) disposed on the graduated element (2), the detection means (3) detecting said pseudo-random code (2b) and the control means (14) determining the initial position in accordance with said detection.
